# EUROPEAN PATENT SPECIFICATION

(11) **EP 3 005 490 B1**
(45) Date of publication and mention of the grant of the patent: **30.01.2019**
(21) Application number: 14729154.6
(22) Date of filing: 02.05.2014
(51) Int. Cl.: H01R 13/625, H01R 13/639

(54) **HAND-TURNABLE WELDING CABLE CONNECTION**
HANDDREHBARE SCHWEISSKABELVERBINDUNG
CONNECTEUR DE CÂBLE DE SOUDAGE

(30) Priority: 29.05.2013 US 201313904257
(43) Date of publication of application: 13.04.2016
(73) Proprietor: Illinois Tool Works Inc., Glenview, IL 60025 (US)
(72) Inventor: BASIT, Nauman, Glenview, Illinois 60025 (US)
(74) Representative: Trinks, Ole
(86) International application number: PCT/US2014/036509
(87) International publication number: WO 2014/193598

(56) References cited:
- EP-A1- 0 739 055
- DE-A1- 2 835 656
- FR-A1- 2 527 280
- US-B1- 7 658 657

## Description

### TECHNICAL FIELD

This disclosure relates to welding, and more particularly to a connection for connecting a welding cable to a welding torch.

### BACKGROUND OF THE INVENTION

It is known in the art relating to welding to utilize a flexible cable to deliver power, shielding gas, electrode wire, and sometimes cooling water to a welding torch. Conventionally, to securely connect a welding cable to a welding torch, a human operator has to push the welding cable all the way onto a corresponding connector on the welding torch and hold the welding cable in place on the welding torch with one hand while tightening a set screw or similar with the other hand. However, this method of connecting the welding cable is cumbersome and can result in a loose connection between the welding cable and welding torch, allowing for potential leakage of shielding gas and poor transfer of electrical welding power from the welding cable to the welding torch. This method also requires the use of tools and loose parts such as fasteners and accessories.

A hand-turnable welding cable connection according to the preamble of claim 1 is disclosed in DE 28 35 656.

### SUMMARY OF THE INVENTION

Disclosed is a hand-turnable welding cable connection for a replaceable welding cable that reduces the possibility of human error during installation. The welding cable connection provides a robust electrical connection and reduces the possibility of shielding gas leakage in comparison to conventional welding cable connections. The welding cable connection also significantly reduces installation time, reduces downtime due to installation errors, and extends the service life of the welding system.

More particularly, in one embodiment a hand-turnable welding cable connection includes a welding cable portion and a welding torch portion. The welding cable portion includes a receiver having an opening defined by an inner, generally cylindrical surface. A slit extends through the receiver. A fastener extends across the slit generally transverse to a longitudinal axis of the receiver and partially protrudes into the opening. The welding torch portion includes a tubular member having a generally cylindrical outer surface. A transverse, circumferentially extending groove is formed on the outer surface of the tubular member. A flat portion is formed on the outer surface of the tubular member. The flat portion extends longitudinally from an end of the groove toward an end of the tubular member. The welding torch portion is insertable in the welding cable portion by aligning the flat portion of the tubular member with the shank of the fastener. The fastener is engagable with the groove. Rotation of the welding cable portion holds the welding cable portion on the welding torch portion, and tightening the fastener narrows the slit and decreases the circumference of the opening to lock the welding cable portion on the welding torch portion.

The welding torch portion may be disposed on a rear end of a welding torch, and the welding cable portion may be disposed on a forward end of a welding cable. The fastener may be one of a screw and a bolt. The groove may extend generally 90 degrees around the outer surface. The groove may be spaced from an outer end of the tubular member. The groove may restrict axial movement of the welding cable portion relative to the welding torch portion. A stop may be disposed at an end of the groove for frictional engagement of the fastener. The slit generally may have an L-shape including a longitudinal portion extending inwardly from an end of the receiver and a circumferential portion extending around the receiver from an inward end of the axial portion. A width of the flat portion may generally correspond to a length of a portion of the fastener that extends into the receiver. An O-ring may be disposed on the tubular member for sealing the connection between the welding cable portion and the welding torch portion.

In another embodiment, a hand-turnable welding cable connection includes a protruding portion and a cooperable receiving portion. The protruding portion includes a generally cylindrical outer surface, and the receiving portion includes an opening defined by a corresponding generally cylindrical inner surface. The receiving portion also includes a locking member. The protruding portion is insertable in the receiving portion. Rotation of the receiving portion relative to the protruding portion holds the receiving portion on the protruding portion, and tightening of the locking member secures the receiving portion to the protruding portion.

The outer surface of the protruding portion may include a longitudinally-extending flat portion connected to a transverse, circumferential groove extending generally 90 degrees around the outer surface. The locking member may be cooperable with the flat portion and the groove to connect the protruding and receiving portions. The receiving portion may include a generally L-shaped slit. The locking member may extend across the slit generally transverse to a longitudinal axis of the receiving portion and may partially protrude into the opening. The protruding portion may be disposed on a rear end of a welding torch, and the receiving portion may be disposed on a forward end of a welding cable.

A method of connecting a welding cable to a welding torch includes the steps of: disposing a welding cable portion on an end of a welding cable, the welding cable portion including a receiver having an opening defined by an inner, generally cylindrical surface, and further including a slit through the receiver, and a fastener extending across the slit generally transverse to a longitudinal axis of the receiver, the fastener partially protruding into the receiver; disposing a welding torch portion on an end of a welding torch, the welding torch portion including a tubular member having a generally cylindrical outer surface; forming a transverse, circumferentially extending groove on the outer surface of the tubular member; forming a flat portion on the outer surface of the tubular member, the flat portion extending longitudinally from an end of the groove toward an end of the tubular member; inserting the welding torch portion in the welding cable portion by aligning the flat portion with the fastener; engaging the fastener with the groove; rotating the welding cable portion circumferentially relative to the welding torch portion to hold the welding cable portion on the welding torch portion; and tightening the fastener to narrow the slit and to decrease the circumference of the receiver to lock the welding cable portion on the welding torch portion.

The groove may extend generally 90 degrees around the outer surface, and the welding cable portion may be rotated generally one-quarter turn relative to the welding torch portion.

These and other features and advantages of the assembly will be more fully understood from the following detailed description of the invention taken together with the accompanying drawings.

### BRIEF DESCRIPTION OF THE DRAWINGS

In the drawings:
FIG. 1 is a perspective view of a hand-turnable welding cable connection illustrating a welding cable portion separated from a welding torch portion;
FIG. 2 is a perspective view of the hand-turnable welding cable connection illustrating the welding cable portion engaged with the welding torch portion in an unlocked disposition;
FIG. 3 is a perspective view of the hand-turnable welding cable connection illustrating the welding cable portion engaged with the welding torch portion in a locked disposition; and
FIG. 4 is a sectional view of the welding cable portion of the hand-turnable welding cable connection.

### DETAILED DESCRIPTION OF THE INVENTION

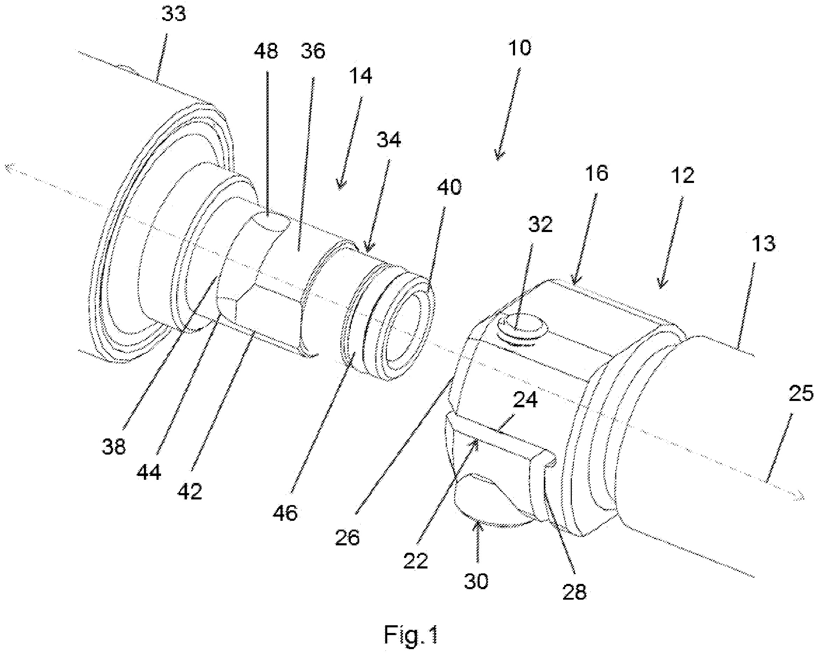

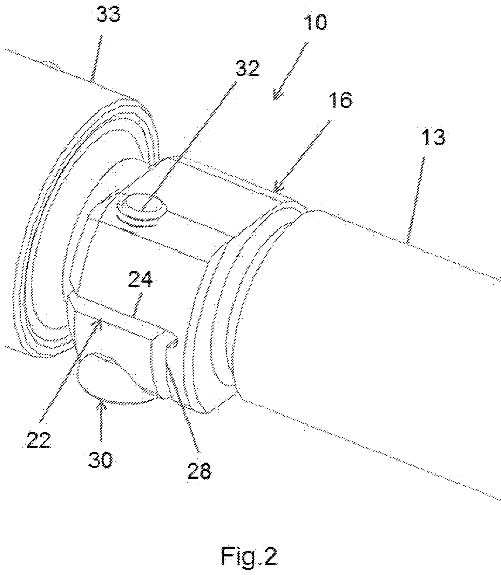

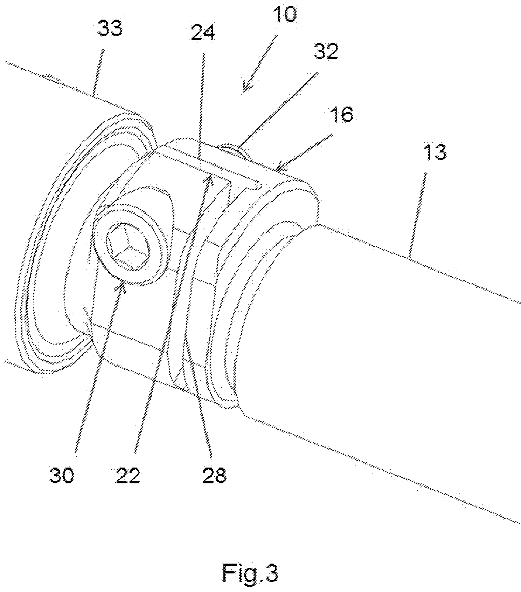

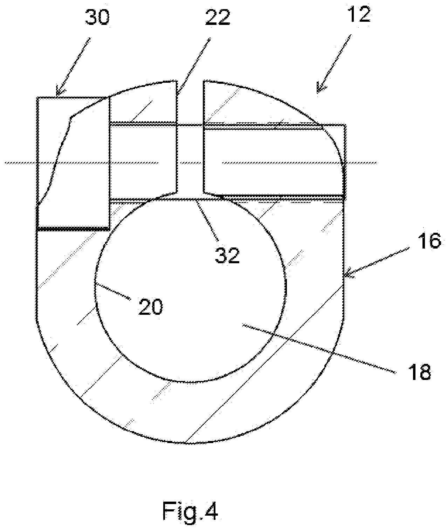

Referring to FIGS. 1 through 4 of the drawings in detail, numeral 10 generally indicates a hand-turnable welding cable connection. The hand-turnable welding cable connection 10 facilitates the connection of a welding cable to a welding torch and improves the seal between the welding cable and the welding torch.

The welding cable connection 10 includes a welding cable portion 12 and a cooperable welding torch portion 14. The welding cable portion 12 is disposed at a forward end of a welding cable 13 that supplies welding wire, shielding gas, and sometimes coolant to a welding torch. The welding cable portion 12 includes a receiver 16. The receiver 16 is a receiving (female) member including an opening 18 defined by an inner, generally cylindrical surface 20. A slit 22 extends through the receiver 16 from an outer surface to the inner surface 20. The slit 22 may be generally L-shaped having a longitudinal portion 24 extending inwardly along a longitudinal axis 25 (axial direction) from an end 26 of the welding cable portion 12, and a circumferential portion 28 extending circumferentially (in a radial direction) around a portion of the receiver 16 from an end of the longitudinal portion 24. A locking member such as a fastener 30 extends across the slit 22 generally transverse to the longitudinal axis 25 of the receiver 16, and the shank 32 of the fastener partially protrudes into the opening. The fastener 30 may be a screw, a bolt, or similar. Squeezing and releasing the welding cable portion 12, such as by tightening or loosening the fastener 30, respectively narrows or widens the slit 22 and alters the circumference of the opening 18, as described in more detail below.

The welding torch portion 14 is disposed on a rear end of a welding torch 33. The welding torch portion 14 includes a protruding (male) tubular member 34 having a generally cylindrical outer surface 36. A transverse, circumferentially extending groove 38 is formed on the outer surface 36 of the tubular member 34. In an exemplary embodiment, the groove 38 extends generally 90 degrees (a quarter-turn) around the outer surface 36, but the groove is not limited to the 90-degree embodiment and may be greater than or less than 90 degrees in length. The groove is also spaced from an outer end 40 of the tubular member 34. A flat portion 42 is formed on the outer surface 36 of the tubular member 34. The flat portion 42 extends longitudinally from an end 44 of the groove 38 toward the outer end 40 of the tubular member 34. The width of the flat portion 42 generally corresponds to a length of the portion of the fastener 30 that extends into the opening 18. The welding torch portion 14 also may include an O-ring 46 on the tubular member 34 for sealing the connection between the welding cable portion 12 and the welding torch portion 14.

The welding torch protruding portion 14 is insertable in the receiving portion of the welding cable portion 12 by aligning the flat portion 42 with the portion of the fastener shank 32 that protrudes into the opening 18. The tubular member 34 is inserted into the receiver 16, and the fastener 30 slides along the flat portion 42 until it reaches the groove 38. The fastener 30 engages the groove 38, and clockwise rotation of the welding cable portion 12 (through an angle of generally 90 degrees) slides the fastener along the groove. In this disposition, the groove 38 restricts axial movement of the welding cable portion 12 relative to the welding torch portion 14 thereby holding the welding cable portion on the welding torch portion. A stop 48 at a terminal end of the groove 38 may allow for further frictional engagement of the fastener 30. An operator therefore does not have to hold the welding cable portion 12 on the welding torch portion 14 and is free to use one hand to tighten the fastener 30. Tightening the fastener 30 narrows the slit 22 and decreases the circumference of the opening 18 to lock the welding cable portion 12 on the welding torch portion 14.

To release the welding torch portion 14 from the welding cable portion 12, the fastener 30 is loosened to widen the slit 22 and to increase the circumference of the opening 18, allowing the welding cable portion to freely rotate relative to the welding torch portion. The welding cable portion 12 is then rotated 90 degrees in a counterclockwise direction so that the fastener 30 is aligned with the flat portion 42. The tubular member 34 of the welding torch portion 14 is then pulled out of the receiver 16.

The hand-turnable welding cable connection 10 eliminates the need for an operator to hold the welding cable in place while tightening the screw. The hand-turnable welding cable connection 10 also prevents a loose engagement of the O-ring with the welding cable portion 12, which reduces the possibility of shielding gas leakage.

While the receiving portion 12 has been described as being disposed on the welding cable and the protruding portion 14 has been described as being disposed on the welding torch, the portions may be switched such that the receiving portion is associated with the welding torch and the protruding portion is associated with the welding cable.

## Claims

1. A hand-turnable welding cable connection (10) comprising:
a welding cable portion (12) and a cooperable welding torch portion (14);
said welding cable portion (12) including a receiver (16) having an opening (18) defined by an inner, generally cylindrical surface (20);
a slit (22) through said receiver (16);
said welding torch portion (14) including a tubular member (34) having a generally cylindrical outer surface (36);
said welding torch portion (14) being insertable in said welding cable portion (12), wherein rotation of said welding cable portion (12) holds said welding cable portion (12) on said welding torch portion (14),
**characterized by**
a fastener (30) extending across said slit (22) generally transverse to a longitudinal axis (25) of said receiver (16), said fastener (30) partially protruding into said opening (18);
a transverse, circumferentially-extending groove (38) formed on said outer surface (36) of said tubular member (34);
a flat portion (42) formed on said outer surface (36) of said tubular member (34), said flat portion (42) extending longitudinally from an end of said groove (38) toward an end of said tubular member (34);
said torch portion (14) being insertable into said welding cable portion (12) by aligning said flat portion (42) with said fastener (30), and said fastener (30) being engagable with said groove (38), and tightening said fastener (30) narrowing said slit (22) and decreasing the circumference of the opening (18) to lock said welding cable portion (12) on said welding torch portion (14).

2. The hand-turnable welding cable connection of claim 1, wherein said fastener (30) is one of a screw and a bolt.

3. The hand-turnable welding cable connection of claim 1 or 2, wherein said groove (38) extends generally 90 degrees around said outer surface (36).

4. The hand-turnable welding cable connection of one of the preceding claims, wherein said groove (38) is spaced from an outer end of said tubular member (34).

5. The hand-turnable welding cable connection of one of the preceding claims, wherein said groove (38) restricts axial movement of said welding cable portion (12) relative to said welding torch portion (14).

6. The hand-turnable welding cable connection of one of the preceding claims, including a stop (48) at an end of said groove (38) for frictional engagement of said fastener (30).

7. The hand-turnable welding cable connection of one of the preceding claims, wherein said slit (22) generally has an L-shape including a longitudinal portion (24) extending inwardly from an end of said receiver (16) and a circumferential portion (28) extending around said receiver (16) from an inward end of said longitudinal portion (24).

8. The hand-turnable welding cable connection of one of the preceding claims, wherein a width of said flat portion (42) generally corresponds to a length of a portion of said fastener (30) that extends into said receiver (16).

9. The hand-turnable welding cable connection of one of the preceding claims, including an O-ring (46) on said tubular member (34) for sealing the connection between said welding cable portion (12) and said welding torch portion (14).

10. The hand-turnable welding cable connection of one of the preceding claims, wherein said welding torch portion (14) is disposed on a rear end of a welding torch.

11. The hand-turnable welding cable connection of one of the preceding claims, wherein said welding cable portion (12) is disposed on a forward end of a welding cable (13).

12. A welding torch including the hand-turnable welding cable connection of one of the preceding claims.

13. A method of connecting a welding cable (13) to a welding torch, the method comprising the steps of:
disposing a welding cable portion (12) on an end of a welding cable (13), said welding cable portion (12) including a receiver (16) having an opening (18) defined by an inner, generally cylindrical surface (20), and further including a slit (22) through said receiver (16), and a fastener (30) extending across said slit (22) generally transverse to a longitudinal axis (25) of said receiver (16), said fastener (30) partially protruding into said receiver (16);
disposing a welding torch portion (14) on an end of a welding torch, said welding torch portion (14) including a tubular member (34) having a generally cylindrical outer surface (36);
forming a transverse, circumferentially extending groove (38) on said outer surface (36) of said tubular member (34);
forming a flat portion (42) on said outer surface (36) of said tubular member (34), said flat portion (42) extending longitudinally from an end of said groove (38) toward an end of said tubular member (34);
inserting said welding torch portion (14) in said welding cable portion (12) by aligning said flat portion (42) with said fastener (30);
engaging said fastener (30) with said groove (38);
rotating said welding cable portion (12) relative to said welding torch portion (14) to hold said welding cable portion (12) on said welding torch portion (14); and
tightening said fastener (30) to narrow said slit (22) and to decrease the circumference of said receiver (16) to lock said welding cable portion (12) on said welding torch portion (14).

14. The method of claim 13, wherein said groove (38) extends generally 90 degrees around said outer surface (36).

15. The method of claim 13 or 14, wherein said welding cable portion (12) is rotated generally one-quarter turn relative to said welding torch portion (14).

## Patentansprüche

1. Von Hand drehbare Schweißkabelverbindung (10), umfassend:
einen Schweißkabelabschnitt (12) und einen zusammenwirkenden Schweißbrennerabschnitt (14);
wobei der Schweißkabelabschnitt (12) einen Empfänger (16) mit einer Öffnung (18), die durch eine innere, im Allgemeinen zylindrische Oberfläche (20) definiert ist, aufweist;
einen Schlitz (22) durch den Empfänger (16);
der Schweißbrennerabschnitt (14) wobei ein rohrförmiges Element (34) mit einer im Wesentlichen zylindrischen Außenfläche (36) aufweist;
wobei der Schweißbrennerabschnitt (14) in den Schweißkabelabschnitt (12) einsetzbar ist, wobei die Drehung des Schweißkabelabschnitts (12) den Schweißkabelabschnitt (12) am Schweißbrennerabschnitt (14) hält,
**gekennzeichnet durch**
ein Befestigungselement (30), das sich über den Schlitz (22) im Allgemeinen quer zu einer Längsachse (25) des Empfängers (16) erstreckt, wobei das Befestigungselement (30) teilweise in die Öffnung (18) hineinragt;
eine transversale, sich in Umfangsrichtung erstreckende Nut (38), die an der Außenfläche (36) des rohrförmigen Elements (34) ausgebildet ist;
einen flachen Abschnitt (42), der an der Außenfläche (36) des rohrförmigen Elements (34) ausgebildet ist, wobei sich der flache Abschnitt (42) in Längsrichtung von einem Ende der Nut (38) zu einem Ende des rohrförmigen Elements (34) erstreckt;
wobei der Brennerabschnitt (14) in den Schweißkabelabschnitt (12) einsetzbar ist, indem der flache Abschnitt (42) mit dem Befestigungselement (30) ausgerichtet wird und das Befestigungselement (30) mit der Nut (38) in Eingriff bringbar ist, und das Befestigungselement (30) den Schlitz (22) verengt und den Umfang der Öffnung (18) verringert, um den Schweißkabelabschnitt (12) am Schweißbrennerabschnitt (14) zu verriegeln.

2. Von Hand drehbare Schweißkabelverbindung nach Anspruch 1, wobei das Verbindungselement (30) aus einer Schraube und einem Bolzen besteht.

3. Von Hand drehbare Schweißkabelverbindung nach Anspruch 1 oder 2, wobei sich die Nut (38) im Allgemeinen um 90 Grad um die Außenfläche (36) erstreckt.

4. Von Hand drehbare Schweißkabelverbindung nach einem der vorhergehenden Ansprüche, wobei die Nut (38) von einem äußeren Ende des rohrförmigen Elements (34) beabstandet ist.

5. Von Hand drehbare Schweißkabelverbindung nach einem der vorhergehenden Ansprüche, wobei die Nut (38) die axiale Bewegung des Schweißkabelabschnitts (12) relativ zum Schweißbrennerabschnitt (14) einschränkt.

6. Von Hand drehbare Schweißkabelverbindung nach einem der vorhergehenden Ansprüche, mit einem Anschlag (48) an einem Ende der Nut (38) zum reibschlüssigen Eingriff des Befestigungsmittels (30).

7. Von Hand drehbare Schweißkabelverbindung nach einem der vorhergehenden Ansprüche, wobei der Schlitz (22) im Allgemeinen eine L-Form aufweist, die einen Längsabschnitt (24), der sich von einem Ende des Empfängers (16) nach innen erstreckt, und einen Umfangsabschnitt (28) aufweist, der sich von einem inneren Ende des Längsabschnitts (24) um den Empfänger (16) herum erstreckt.

8. Von Hand drehbare Schweißkabelverbindung nach einem der vorhergehenden Ansprüche, wobei eine Breite des flachen Abschnitts (42) im Allgemeinen einer Länge eines Abschnitts des Befestigungsmittels (30) entspricht, die sich in den Empfänger (16) erstreckt.

9. Von Hand drehbare Schweißkabelverbindung nach einem der vorhergehenden Ansprüche mit einem O-Ring (46) am rohrförmigen Element (34) zum Abdichten der Verbindung zwischen dem Schweißkabelabschnitt (12) und dem Schweißbrennerabschnitt (14).

10. Von Hand drehbare Schweißkabelverbindung nach einem der vorhergehenden Ansprüche, wobei der Schweißbrennerabschnitt (14) an einem hinteren Ende eines Schweißbrenners angeordnet ist.

11. Von Hand drehbare Schweißkabelverbindung nach einem der vorhergehenden Ansprüche, wobei der Schweißkabelabschnitt (12) an einem vorderen Ende eines Schweißkabels (13) angeordnet ist.

12. Schweißbrenner mit der von Hand drehbaren Schweißkabelverbindung nach einem der vorhergehenden Ansprüche.

13. Verfahren zum Verbinden eines Schweißkabels (13) mit einem Schweißbrenner, wobei das Verfahren die folgenden Schritte umfasst:
Anordnen eines Schweißkabelabschnitts (12) an einem Ende eines Schweißkabels (13), wobei der Schweißkabelabschnitt (12) einen Empfänger (16) mit einer Öffnung (18), die durch eine innere, im Allgemeinen zylindrische Oberfläche (20) definiert ist, und ferner einen Schlitz (22) durch den Empfänger (16) und ein Befestigungselement (30) umfasst, das sich über den Schlitz (22) im Allgemeinen quer zu einer Längsachse (25) des Empfängers (16) erstreckt, wobei das Befestigungselement (30) teilweise in die Öffnung (18) hineinragt;
Anordnen eines Schweißbrennerabschnitts (14) am Ende eines Schweißbrenners, wobei der Schweißbrennerabschnitt (14) ein rohrförmiges Element (34) mit einer im Wesentlichen zylindrischen Außenfläche (36) aufweist;
Ausbilden einer transversalen, sich in Umfangsrichtung erstreckenden Nut (38) an der Außenfläche (36) des rohrförmigen Elements (34);
Ausbilden eines flachen Abschnitts (42) an der Außenfläche (36) des rohrförmigen Elements (34), wobei sich der flache Abschnitt (42) in Längsrichtung von einem Ende der Nut (38) zu einem Ende des rohrförmigen Elements (34) erstreckt;
Einsetzen des Schweißbrennerabschnitts (14) in den Schweißkabelabschnitt (12) durch Ausrichten des Vorrichtungsabschnitts (42) mit dem Verbindungselement (30);
Ineingriffbringen des Verbindungselements (30) mit der Nut (38);
Drehen des Schweißkabelabschnitts (12) relativ zum Schweißbrennerabschnitt (14), um den Schweißkabelabschnitt (12) am Schweißbrennerabschnitt (14) zu halten; und Festziehen des Befestigungselements (30), um den Schlitz (22) zu verengen und den Umfang des Empfängers (16) zu verringern, um den Schweißkabelabschnitt (12) am Schweißbrennerabschnitt (14) zu verriegeln.

14. Verfahren nach Anspruch 13, wobei sich die Nut (38) im Allgemeinen um 90 Grad um die Außenfläche (36) erstreckt.

15. Verfahren nach Anspruch 13 oder 14, wobei der Schweißkabelabschnitt (12) im Allgemeinen eine Viertelumdrehung relativ zum Schweißbrennerabschnitt (14) gedreht wird.

## Revendications

1. Connexion de câble de soudage pouvant être tournée à la main (10) comprenant :
une partie câble de soudage (12) et une partie torche de soudage pouvant coopérer (14) ;
ladite partie câble de soudage (12) comprenant un élément de réception (16) ayant une ouverture (18) définie par une surface interne généralement cylindrique (20) ;
une fente (22) à travers ledit élément de réception (16) ;
ladite partie torche de soudage (14) comprenant un élément tubulaire (34) ayant une surface externe généralement cylindrique (36) ;
ladite partie torche de soudage (14) pouvant être insérée dans ladite partie câble de soudage (12), dans laquelle la rotation de ladite partie câble de soudage (12) maintient ladite partie câble de soudage (12) sur ladite partie torche de soudage (14),
**caractérisée par**
un élément de fixation (30) s'étendant à travers ladite fente (22) généralement de manière transversale à un axe longitudinal (25) dudit élément de réception (16), ledit élément de fixation (30) faisant partiellement saillie dans ladite ouverture (18) ;
une rainure transversale s'étendant de manière circonférentielle (38) formée sur ladite surface externe (36) dudit élément tubulaire (34) ;
une partie plate (42) formée sur ladite surface externe (36) dudit élément tubulaire (34), ladite partie plate (42) s'étendant longitudinalement depuis une extrémité de ladite rainure (38) vers une extrémité dudit élément tubulaire (34) ;
ladite partie torche de soudage (14) pouvant être insérée dans ladite partie câble de soudage (12) en alignant ladite partie plate (42) sur ledit élément de fixation (30) et ledit élément de fixation (30) pouvant être mis en prise avec ladite rainure (38) et serrant ledit élément de fixation (30) rétrécissant ladite fente (22) et diminuant la circonférence de l'ouverture (18) pour verrouiller ladite partie câble de soudage (12) sur ladite partie torche de soudage (14).

2. Connexion de câble de soudage pouvant être tournée à la main selon la revendication 1, dans laquelle ledit élément de fixation (30) est soit une vis, soit un boulon.

3. Connexion de câble de soudage pouvant être tournée à la main selon la revendication 1 ou 2, dans laquelle ladite rainure (38) s'étend généralement de 90 degrés autour de ladite surface externe (36).

4. Connexion de câble de soudage pouvant être tournée à la main selon l'une des revendications précédentes, dans laquelle ladite rainure (38) est espacée d'une extrémité externe dudit élément tubulaire (34).

5. Connexion de câble de soudage pouvant être tournée à la main selon l'une des revendications précédentes, dans laquelle ladite rainure (38) limite le mouvement axial de ladite partie câble de soudage (12) par rapport à ladite partie torche de soudage (14).

6. Connexion de câble de soudage pouvant être tournée à la main selon l'une des revendications précédentes, comprenant un arrêt (48) au niveau d'une extrémité de ladite rainure (38) pour une mise en prise par frottement dudit élément de fixation (30) .

7. Connexion de câble de soudage pouvant être tournée à la main selon l'une des revendications précédentes, dans laquelle ladite fente (22) a généralement une forme de L comprenant une partie longitudinale (24) s'étendant vers l'intérieur depuis une extrémité dudit élément de réception (16) est une partie circonférentielle (28) s'étendant autour dudit élément de réception (16) depuis une extrémité vers l'intérieur de ladite partie longitudinale (24).

8. Connexion de câble de soudage pouvant être tournée à la main selon l'une des revendications précédentes, dans laquelle une largeur de ladite partie plate (42) correspond généralement à une longueur d'une partie dudit élément de fixation (30) qui s'étend dans ledit élément de réception (16).

9. Connexion de câble de soudage pouvant être tournée à la main selon l'une des revendications précédentes, comprenant un joint torique (46) sur ledit élément tubulaire (34) pour tenir de façon étanche la connexion entre ladite partie câble de soudage (12) et ladite partie torche de soudage (14) .

10. Connexion de câble de soudage pouvant être tournée à la main selon l'une des revendications précédentes, dans laquelle ladite partie torche de soudage (14) est disposée sur une extrémité arrière d'une torche de soudage.

11. Connexion de câble de soudage pouvant être tournée à la main selon l'une des revendications précédentes, dans laquelle ladite partie câble de soudage (12) est disposée sur une extrémité avant d'un câble de soudage (13).

12. Torche de soudage comprenant la connexion de câble de soudage pouvant être tournée à la main selon l'une des revendications précédentes.

13. Procédé de connexion d'un câble de soudage (13) à une torche de soudage, le procédé comprenant les étapes consistant :
à disposer une partie câble de soudage (12) sur une extrémité d'un câble de soudage (13), ladite partie câble de soudage (12) comprenant un élément de réception (16) ayant une ouverture (18) définie par une surface interne généralement cylindrique (20) et comprenant en outre une fente (22) à travers ledit élément de réception (16) et un élément de fixation (30) s'étendant à travers ladite fente (22) généralement de manière transversale à un axe longitudinal (25) dudit élément de réception (16), ledit élément de fixation (30) faisant partiellement saillie dans ledit élément de réception (16) ;
à disposer une partie torche de soudage (14) sur une extrémité d'une torche de soudage, ladite partie torche de soudage (14) comprenant un élément tubulaire (34) ayant une surface externe généralement cylindrique (36) ;
à former une rainure transversale s'étendant de manière circonférentielle (38) sur ladite surface externe (36) dudit élément tubulaire (34) ;
à former une partie plate (42) sur ladite surface externe (36) dudit élément tubulaire (34), ladite partie plate (42) s'étendant longitudinalement depuis une extrémité de ladite rainure (38) vers une extrémité dudit élément tubulaire (34) ;
à insérer ladite partie torche de soudage (14) dans ladite partie câble de soudage (12) en alignant ladite partie plate (42) sur ledit élément de fixation (30) ;
à mettre en prise ledit élément de fixation (30) avec ladite rainure (38) ;
à faire tourner ladite partie câble de soudage (12) par rapport à ladite partie torche de soudage (14) pour maintenir ladite partie câble de soudage (12) sur ladite partie torche de soudage (14) ; et
à serrer ledit élément de fixation (30) pour rétrécir ladite fente (22) et pour diminuer la circonférence dudit élément de réception (16) pour verrouiller ladite partie câble de soudage (12) sur ladite partie torche de soudage (14).

14. Procédé selon la revendication 13, dans lequel ladite rainure (38) s'étend généralement de 90 degrés autour de ladite surface externe (36).

15. Procédé selon la revendication 13 ou 14, dans lequel ladite partie câble de soudage (12) est tournée généralement d'un quart de tour par rapport à ladite partie torche de soudage (14).
